# EUROPEAN PATENT APPLICATION

(11) **EP 4 800 591 A1**
(43) Date of publication of application: **02.09.2026**
(21) Application number: 26160899.6
(22) Date of filing: 26.02.2026
(51) Int. Cl.: G06F 21/60, G06F 21/79, G06F 21/72, G06F 21/78, G06F 12/14

(54) **SYSTEMS AND METHODS FOR PROCESSING-IN-MEMORY ENCRYPTION ON MOBILE SYSTEMS ON A CHIP**

(30) Priority: 26.02.2025 US 202563763899 P; 23.01.2026 US 202619458127
(71) Applicant: Samsung Electronics Co., Ltd., Suwon-si, Gyeonggi-do 16677 (KR)
(72) Inventor: LI, Yanru, San Jose, CA, 95134 (US); GUO, Xiaochen, San Jose, CA, 95134 (US); QUACH, Nhon Toai, San Jose, CA, 95134 (US)
(74) Representative: Kuhnen & Wacker Patent- und Rechtsanwaltsbüro PartG mbB

(57) **Abstract**

A device, system, and method are disclosed for efficiently enabling Processing-in-Memory, PIM, or processing-near-memory, PNM, compression on mobile systems on a chip, SoC. In an embodiment, a memory device (310) includes a cryptographic engine, CE (316), wherein the memory device (310) is configured to receive encrypted data via a memory input/output, IO, bus (320), and the CE (316) is configured to decrypt the encrypted data to obtain decrypted data. The memory device (310) can further comprise a PIM or PNM device (314) configured to process the decrypted data.

## Description

### TECHNICAL FIELD

The disclosure generally relates to processing in or near memory. More particularly, the subject matter disclosed herein relates to improvements to data protection for processing in or near memory devices.

### SUMMARY

System on a chip (SoC) architecture may include multiple levels of memories in the system for graphics and compute accelerators, such as: block internal cache/memory, system-level cache (SLC), and external dynamic random-access memory (DRAM) as system memory. Different levels of memory may have different latency and different energy consumption per access (pJ/B).

In addition, workloads can have different behaviors of compute versus memory access, for example compute bound vs. memory bound. As described herein, decoder-based large language models (LLMs) may include types of computation such as matrix-matrix multiply (MMM) or general matrix multiply (GEMM) and matrix-vector multiply (MVM) or general matrix-vector multiply (GEMV). MMM may be referred to as compute bound (since the amount of computation scales as O(N³) with the size N of the matrix), whereas MVM may be referred to as memory bound.

To reduce the demands on memory bandwidth, processing in or near external memory has been developed to perform some computation within an external DRAM device. By localizing operations near accelerators, the cost of power to transport data can be reduced. Thus, to circumvent a memory bound problem, techniques such as processing in memory (PIM) or processing near memory (PNM) may be used, which perform the data processing in or near the DRAM, thereby avoiding a bottleneck due to DRAM bandwidth (BW). This may be considered a benefit for low-power double data rate (LPDDR)-PIM, in some examples.

For LLM, model weights may be protected via encryption. Data protection techniques such as encryption are employed on legacy non-PIM DDR. The protection should still apply in the context of PIM. However, with some LP6-PIM devices, encrypted model weights in DRAM must be read out and decrypted outside of the memory device and then stored back for PIM to process on the decrypted weights.

To address these issues, systems and methods are described herein for efficiently enabling PIM or PNM compression on mobile SoC. Embodiments described herein can address this challenge by including efficient methods to perform PIM-encryption/decryption that enable LPDDR-PIM on mobile SoCs. Embodiments described herein may enable weight encryption for privacy protection with tolerable performance and/or area impact. In some embodiments, methods to decrypt (during processing) and re-encrypt the results before writing them back to the DRAM are described.

In the absence of PIM, DRAM content encryption/decryption, may be challenging to implement because of its area and performance impact. The presence of PIM may introduce further challenges. Embodiments described herein can overcome these issues by providing efficient methods and systems to implement weight encryption and/or decryption in the LPDDR-PIM.

Benefits according to some embodiments described herein may include enabling encryption in LPDDR-PIM to protect the target data for a PIM operation, such as the weights and feature map of the LLM models, which may be a requirement in on-device machine learning application.

In an embodiment, a method comprises receiving, by a memory device including a cryptographic engine (CE) and a processing-in-memory (PIM) or processing-near-memory (PNM) device, encrypted data via a memory input/output (10) bus; decrypting, by the CE, the encrypted data to obtain decrypted data; and processing, by the PIM or PNM device, the decrypted data.

In an embodiment, a memory device includes a CE, wherein the memory device is configured to receive encrypted data via a memory IO bus, and the CE is configured to decrypt the encrypted data to obtain decrypted data. The memory device can further comprise a PIM or PNM device configured to process the decrypted data.

### BRIEF DESCRIPTION OF THE DRAWING

In the following section, the aspects of the subject matter disclosed herein will be described with reference to exemplary embodiments illustrated in the figures, in which:
FIG. 1 is a block diagram illustrating an SoC controlling a memory device including a PIM device.
FIG. 2A is a block diagram illustrating an SoC controlling a memory device including a PIM device without data protection, such as cryptography.
FIG. 2B is a block diagram illustrating an SoC controlling a memory device that utilizes cryptographic data protection, but lacks PIM capability.
FIG. 3 is a block diagram illustrating an SoC controlling a memory device including a PIM device with a cryptographic engine for data protection, according to an embodiment.
FIG. 4A is a block diagram illustrating a memory device including a PIM device with a cryptographic engine on the memory device's die, according to an embodiment.
FIG. 4B is a block diagram illustrating an SoC controlling a memory device including a PIM device with a cryptographic engine on the memory device's die, according to an embodiment.
FIG. 5A is a block diagram illustrating a memory device including a PIM device with a cryptographic engine on the PIM device, according to an embodiment.
FIG. 5B is a block diagram illustrating an SoC controlling a memory device including a PIM device with a cryptographic engine on the PIM device, according to an embodiment.
FIG. 6A is a block diagram schematically illustrating key initialization based on a sequence in a memory device with a PIM, according to an embodiment.
FIG. 6B is a block diagram schematically illustrating key initialization based on key exchange in a memory device with a PIM, according to an embodiment.
FIG. 6C is a block diagram schematically illustrating key initialization not using key exchange in a memory device with a PIM, according to an embodiment.
FIG. 7A is a communication flow diagram illustrating a method for efficiently enabling PIM or processing-near-memory (PNM) compression on a mobile SoC, according to an embodiment.
FIG. 7B is a communication flow diagram illustrating a method for storing encrypted data in a memory array while enabling PIM or PNM compression on a mobile SoC, according to an embodiment.
FIG. 7C is a communication flow diagram illustrating a method for storing unencrypted data in a memory array while enabling PIM or PNM compression on a mobile SoC, according to an embodiment.
FIG. 8A is a communication flow diagram illustrating a method for key initialization based on a sequence in a memory device with a PIM, according to an embodiment.
FIG. 8B is a communication flow diagram illustrating a method for asymmetric key initialization in a memory device with a PIM, according to an embodiment.
FIG. 8C is a communication flow diagram illustrating a method for symmetric key initialization in a memory device with a PIM, according to an embodiment.
FIG. 9 is a block diagram of an electronic device in a network environment, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" may refer to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

SoC architecture may include multiple levels of memories in the system for the graphics and compute accelerators, such as: block internal cache / memory, SLC, and external DRAM as system memory. Different levels of memory can have different latency and different energy consumption per access (pJ/B).

In addition, workloads can have different behaviors of compute vs. memory access. As described herein, decoder-based LLMs may include a few types of computation such as MMM and MVM. MMM may be referred to as compute bound (since the amount of computation scales as O(N³) with the size N of the matrix), whereas MVM may be referred to as memory bound.

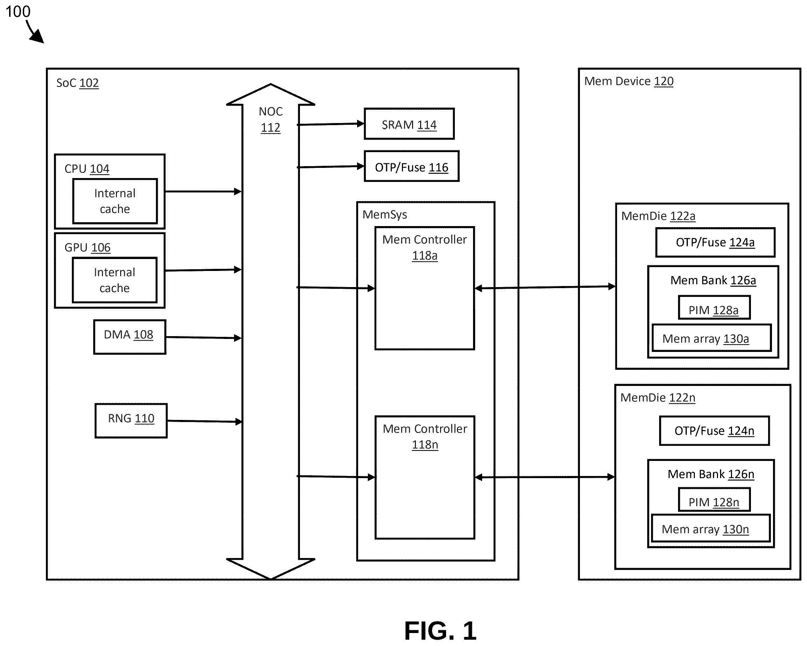

FIG. 1 is a block diagram 100 illustrating an SoC 102 controlling a memory device 120 including one or more PIM devices 128a to 128n. For example, the memory device 120 may be an external DRAM providing system memory for SoC 102.

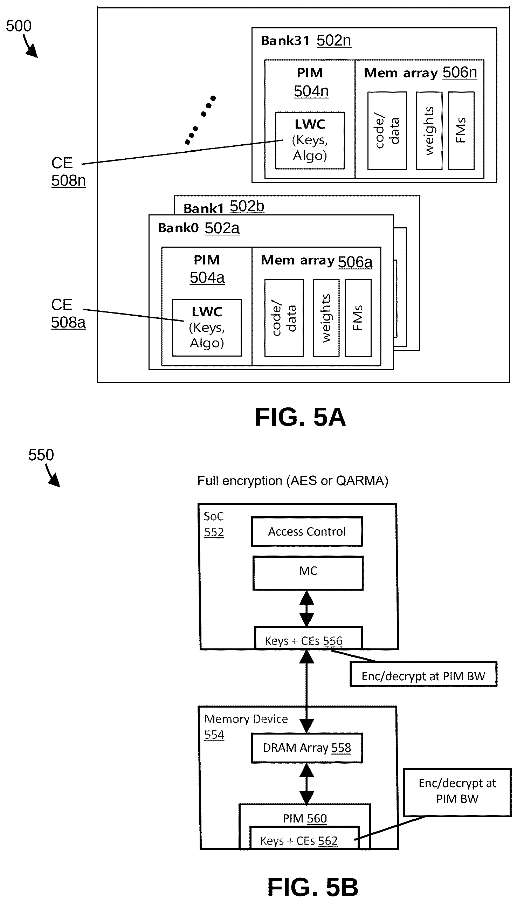

Referring to FIG. 1, an SoC 102 can be in communication with a memory device 120 via an IO bus. The SoC 102 can include a central processing unit (CPU) 104, a graphics processing unit (GPU) 106, a random number generator (RNG) 110, and any number of memory controllers 118a to 118n. The memory device 120 can include memory dies 122a to 122n, which can respectively be in communication with memory controllers 118a to 118n of SoC 102. Alternatively, the memory dies 122a to 122n may differ in number from the memory controllers 118a to 118n, for example the memory device 120 may include any number of memory dies 122a to 122n. The memory dies 122a to 122n can include one-time programmable memory (OTP) / Fuses 124a to 124n and memory banks 126a to 126n, which can include the PIM devices 128a to 128n and memory arrays 130a to 130n. In some examples, the PIM devices 128a to 128n may be PNM devices. Alternatively or additionally, the PIMs 128a to 128n can include CEs, as in the examples of FIGS. 5A-B.

To reduce the demands on memory bandwidth, processing in or near external memory has been developed, so as to perform some computation within an external DRAM device. By localizing operations near accelerators, processing in or near external memory can reduce the cost of power to transport data. In some cases, to circumvent a memory bound problem, techniques called processing in memory (PIM) or processing near memory (PNM) may be used, which perform the data processing in or near the DRAM, thereby avoiding a bottleneck due to DRAM BW (bandwidth). For example, the PIM or PNM devices 128a to 128n of FIG. 1 can locally process data stored in the memory arrays 130a to 130n and/or memory banks 126a to 126n, respectively. This may be considered a benefit for LPDDR-PIM (Low-Power Double Data Rate-PIM), in some examples.

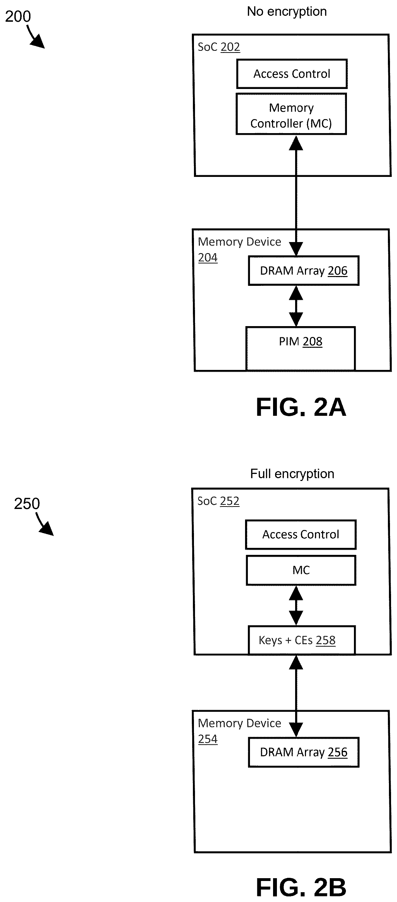

However, it may be challenging to design PIMs or PNMs such as the devices 128a to 128n that can operate on encrypted data. For example, it may be difficult to design PIMs or PNMs that can add and/or multiply encrypted data. Thus, PIMs or PNMs such as the devices 128a to 128n may only be configured to operate on unencrypted (e.g., cleartext) data. Accordingly, some PIM systems such as system 100 are available that operate on unencrypted data (e.g., PIM is available without data protection), while legacy memory devices (e.g., non-PIM DDR) are available with data protection but without PIM. For example, FIG. 2A is a block diagram 200 illustrating an SoC 202 controlling a memory device 204 including a PIM device 208 without data protection, such as cryptography. FIG. 2B is a block diagram 250 illustrating an SoC 252 controlling a memory device 254 that utilizes cryptographic data protection, but lacks any PIM capability (e.g., a legacy non-PIM DDR).

Referring to FIG. 2A, an SoC 202 without encryption can be in communication with a memory device 204 (e.g., DRAM). The memory device includes a PIM or PNM 208. Therefore, by localizing operations closer to accelerators, the cost of power to transport data can be reduced. However, in this example, since PIM 208 operates on unencrypted data, SoC 202 lacks a CE. Accordingly, system 200 lacks data protection, such as cryptography. In some examples, even if SoC 202 had a CE, it would not use the CE (e.g., SoC 202 would send and receive unencrypted or cleartext data to and from memory device 204) for data to be processed, or previously processed, by PIM 208. In some examples (e.g., LP6-PIM), encrypted model weights in DRAM can be read out and decrypted outside of the memory device and subsequently stored back for PIM to process on the decrypted weights.

Referring to FIG. 2B, an SoC 252 has encryption via one or more CEs 258. SoC 252 is in communication with a memory device 254 having a memory array 256 (e.g., a DRAM array). Therefore, data communicated via the IO bus and/or stored in memory array 256, such as model weights for LLM, can be protected by data protection techniques such as encryption. However, in this example, memory device 254 does not have a PIM or PNM. Accordingly, system 250 cannot provide the advantages of PIM, such as reducing the cost of power to transport data. In some examples, even if memory device 254 had a PIM, it would be unable to use CEs 258 to encrypt or decrypt data to be processed, or previously processed, by the PIM. Data protection techniques such as encryption can be employed on legacy non-PIM DDR, such as the memory device 254. There remains a need for such data protection also to apply in the context of PIM.

The embodiments described herein can address these problems by including efficient methods to perform PIM encryption and/or decryption that enable LPDDR-PIM on mobile SoCs. Embodiments described herein may enable weight encryption for privacy protection with tolerable performance and/or area impact. According to some embodiments, a CE may be added to the DDR memory device to encrypt/decrypt the data as needed. For example, the embodiments of the disclosed system can decrypt data during processing, and re-encrypt the results before writing them back to DRAM.

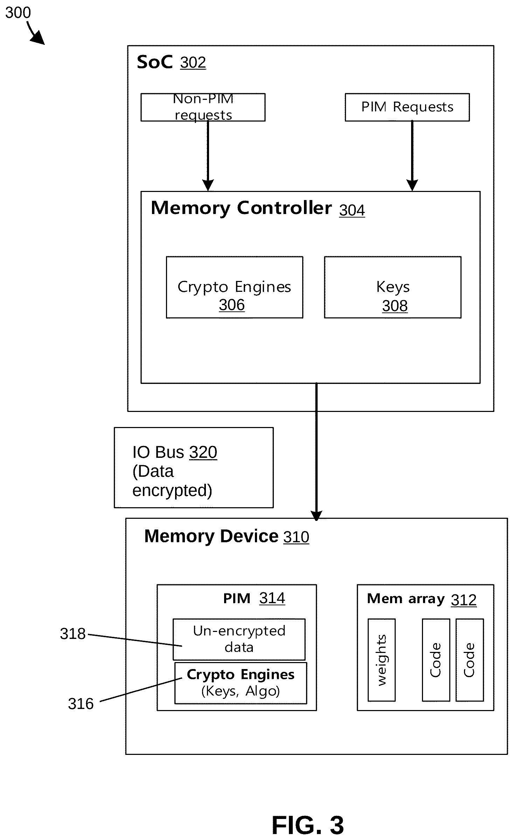

FIG. 3 is a block diagram 300 illustrating an SoC 302 controlling a memory device including a PIM device with a cryptographic engine for data protection, according to an embodiment. In some embodiments, the disclosed system 300 can implement cryptographic features into a memory device (e.g., DRAM) 310 to decrypt data, so that PIM unit 314 can operate on non-encrypted data.

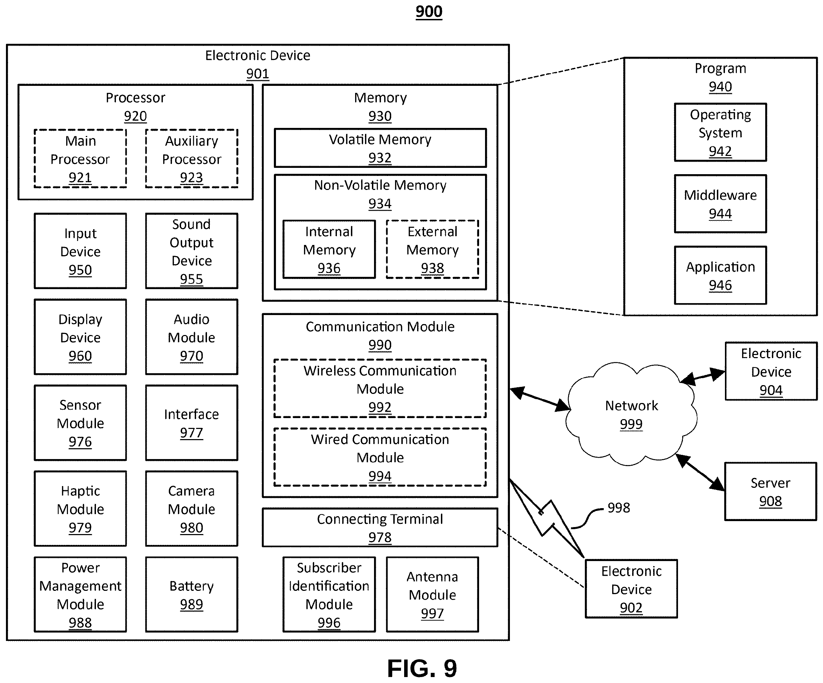

In various embodiments, the SoC 302 may correspond to any host, such as the processor 920, main processor 921, auxiliary processor 923, and/or electronic device 901 of FIG. 9, a CPU, an application processor (AP), a GPU, an image signal processor (ISP), a sensor hub processor, and/or a communication processor (CP), and is not limited by the present disclosure.

Referring to FIG. 3, the SoC 302 can include a memory controller 304, which can include a CE 306 and can store keys 308. SoC 302 can be in communication with a memory device 310 (e.g., a DDR memory device such as DRAM), which can include a memory array 312 and a PIM 314, via an IO bus 320 (e.g., DRAM IO). In this example, the PIM 314 can include a CE 316 and can store data 318. In some embodiments, PIM 314 may be a PNM, and is not limited by the present disclosure.

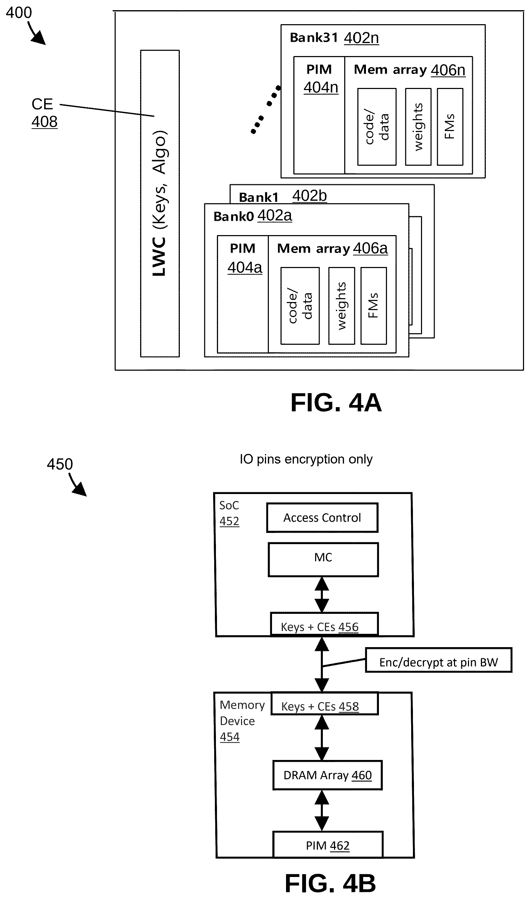

Compared with the example systems 100 and 200 of FIGS. 1-2, in the system 300, the CE 316 may be added to the memory device 310 to encrypt and/or decrypt the data as needed. In some examples, the data may be encrypted when it is transmitted over the IO bus 320 to or from memory device 310. Accordingly, in order to process the data in or near memory, PIM 314 can encrypt and/or decrypt the data locally. For example, PIM 314 can encrypt and/or decrypt the data via CE 316, which can reside on PIM 314 as shown, or on the memory die, as in the examples of FIGS. 4A-4B. In some embodiments, the data may be stored in the memory array 312 in the encrypted format in which it was received. For example, in some embodiments, the PIM 314 can decrypt data during processing, and re-encrypt the results before writing them back to the memory array 312. In other embodiments, the data may be decrypted before being stored in the memory array 312, and so it is not stored in the encrypted format.

In some embodiments, the CE 306 of SoC 302 may utilize a lightweight Advanced Encryption Standard (AES)-like encryption engine to encrypt model weights (e.g., for LLM models and/or on-die Machine Learning applications) at the memory controller 304 before transmitting the weights via IO bus 320 to the LPDDR-PIM memory device 310. Additionally, in some embodiments, the CE 316 in the logic block of PIM 314 may implement a lightweight AES-like decryption engine to decrypt and process the weights, for example during corresponding MVM operations. For example, CE 306 and/or CE 316 may be lightweight CEs (LWCs). Some embodiments may include a PIM-compression block which comprises a pre-loading buffer, decompression logic (such as Huffman decoder), and Arithmetic Logic Units (ALUs) for MVM calculation. Some embodiments may re-encrypt the results and store them in the DRAM memory.

Benefits according to some embodiments described herein may include enabling encryption in PIM 314 of LPDDR 310, so as to protect the target data for PIM operation, such as the weights and feature map of the LLM models, which may be a requirement in on-die Machine Learning applications. In various examples, the system 300 (e.g., CE 306 together with CE 316) may be used to protect commercial large models and user private models (such as low-rank adaptation (LoRA) models) for PIM usage, and/or may be used to protect any other application, and is not limited by the present disclosure.

In one embodiment the memory device's local CE may be located at the DRAM die level, to be shared among multiple PIMs and/or memory banks of the memory device, as illustrated below in the examples of FIGS. 4A-4B. In another embodiment the memory device's CE may be located at the level of the PIMs and/or memory banks, as illustrated in the examples of FIGS. 3 and 5A-5B.

FIG. 4A is a block diagram illustrating a memory device 400 including a PIM device with a cryptographic engine on the memory device's die, according to an embodiment. FIG. 4B is a block diagram 450 illustrating an SoC controlling a memory device including a PIM device with a cryptographic engine on the memory device's die, according to an embodiment.

Referring to FIG. 4A, memory device 400 includes a memory die with any number of memory banks 402a to 402n, respectively including PIMs or PNMs 404a to 404n and memory arrays 406a to 406n. The memory device 400 also includes a CE 408 (e.g., an LWC) which is located on the die of memory device 400.

Referring to FIG. 4B, the system 450 includes an SoC 452 having a CE 456, and a memory device 454 having a CE 458, a memory array 460, and a PIM or PNM 462. The CE 458, memory array 460, and PIM 462 may correspond to the CE 408, memory arrays 406a to 406n, and PIMs 404a to 404n, respectively, of memory device 400 of FIG. 4A. The CE 458 can be located on the memory die of memory device 454. Accordingly, the PIM 462 can reduce the cost of power to transport data, while the CE 458 can protect data, such as model weights for LLM, by data protection techniques such as encryption.

FIG. 5A is a block diagram illustrating a memory device 500 including a PIM device with a cryptographic engine on the PIM device, according to an embodiment. FIG. 5B is a block diagram 550 illustrating an SoC 552 controlling a memory device including a PIM device with a cryptographic engine on the PIM device, according to an embodiment.

Referring to FIG. 5A, memory device 500 includes a memory die with any number of memory banks 502a to 502n, respectively including PIMs or PNMs 504a to 504n, memory arrays 506a to 506n, and CEs 508a to 508n (e.g., LWCs). The CEs 508a to 508n can be located within the PIMs or PNMs 504a to 504n, respectively.

Referring to FIG. 5B, the system 550 includes an SoC 552 having a CE 556, and a memory device 554 having a memory array 558 and a PIM or PNM 560 having a CE 562. The memory array 558, PIM 560, and CE 562 may correspond to the memory arrays 506a to 506n, PIMs 504a to 504n, and CEs 508a to 508n, respectively, of memory device 500 of FIG. 5A. The CE 562 can be located within the PIM 560 of memory device 554. Accordingly, the PIM 560 can reduce the cost of power to transport data, while the CE 562 can protect data, such as model weights for LLM, by data protection techniques such as encryption.

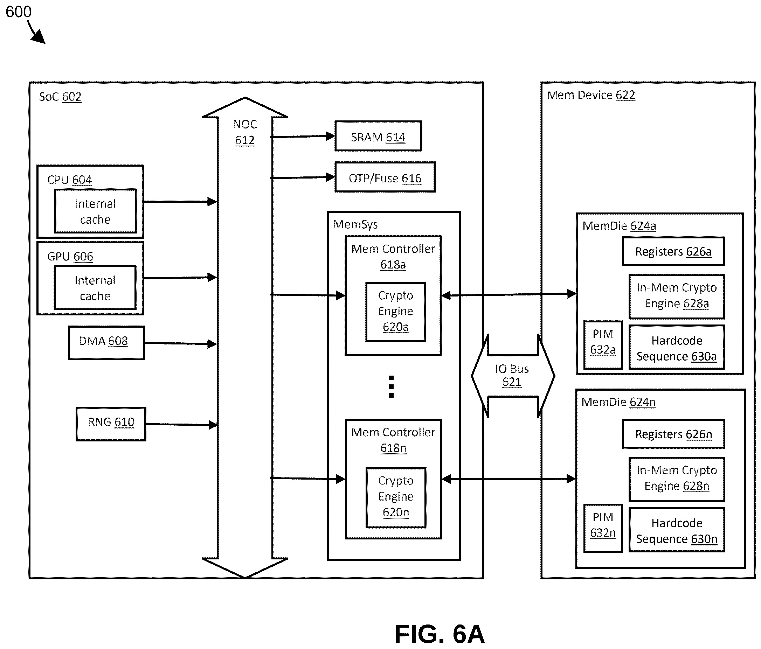

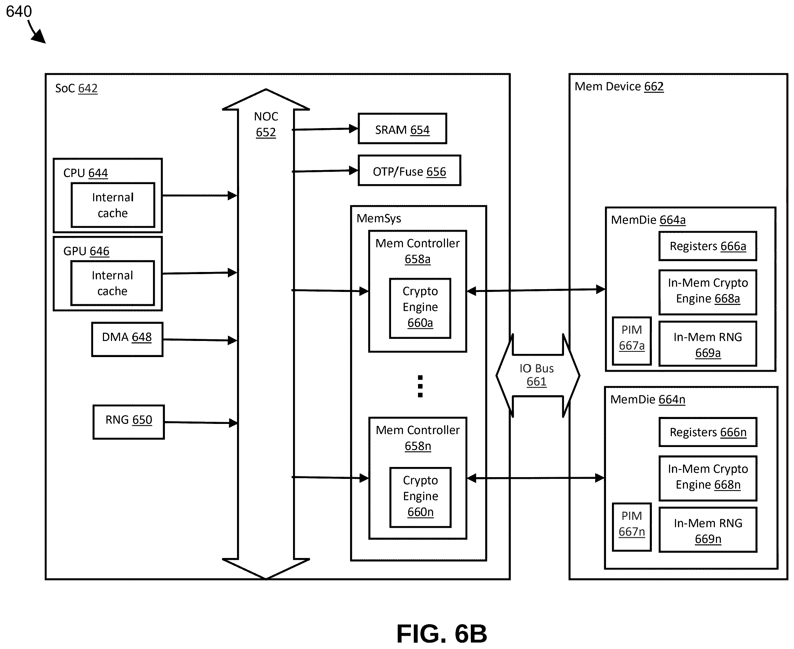

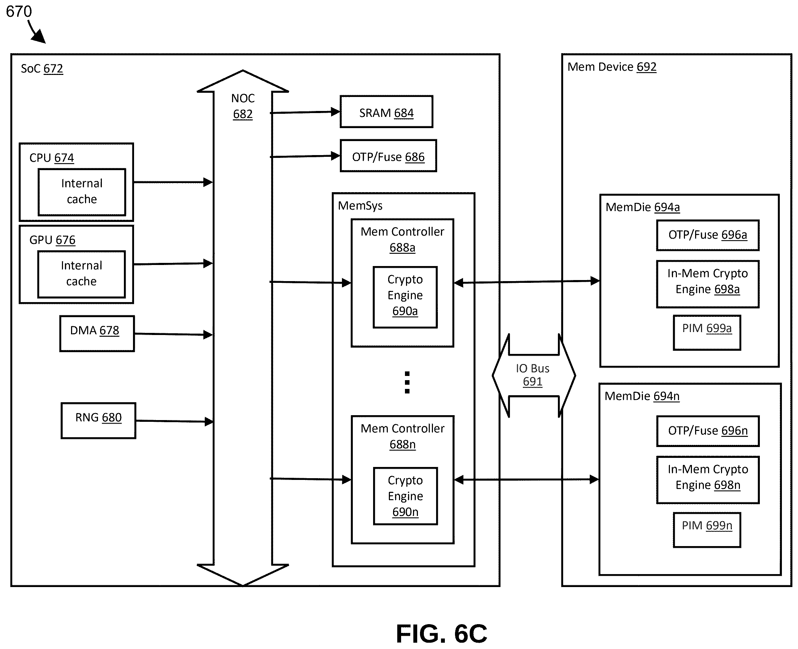

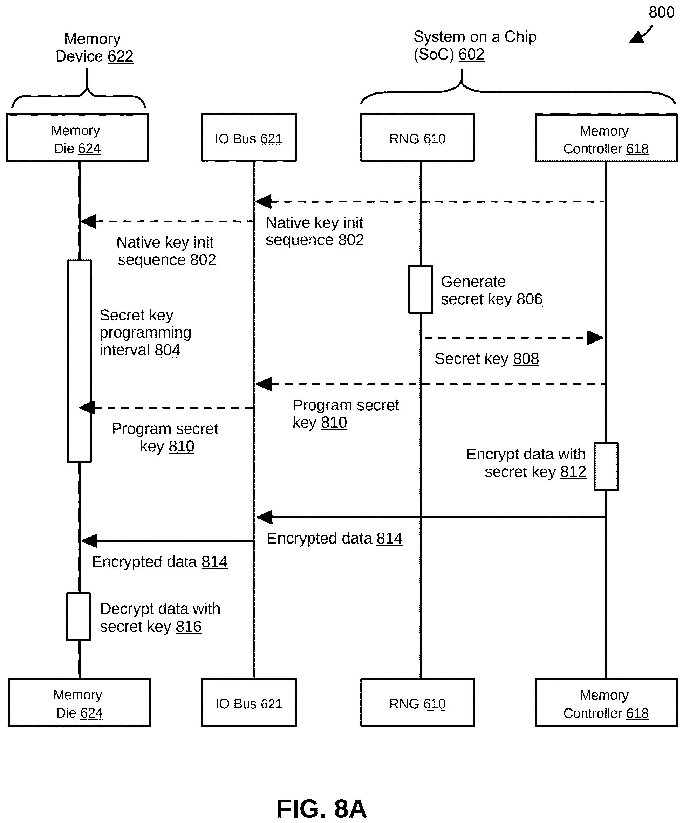

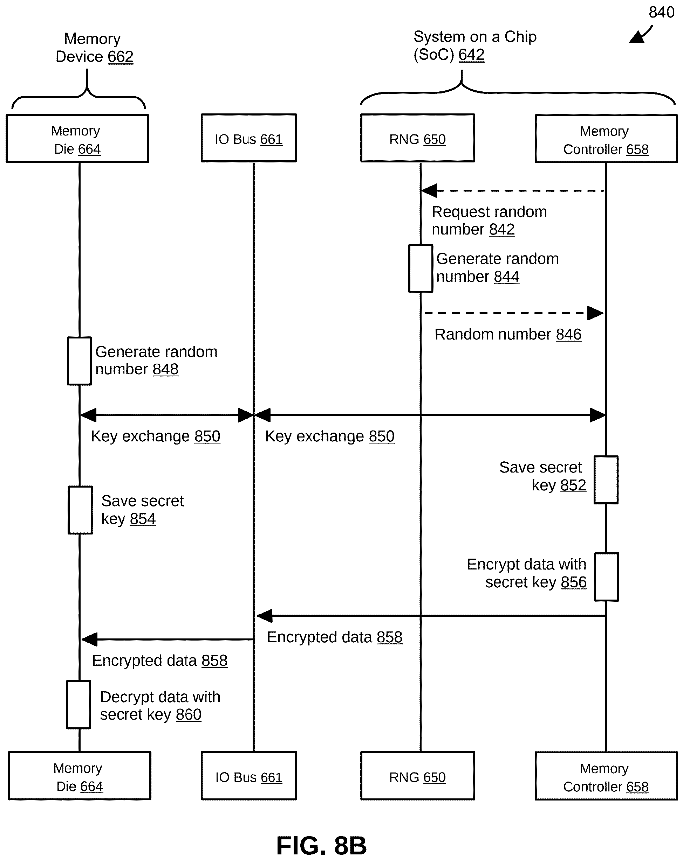

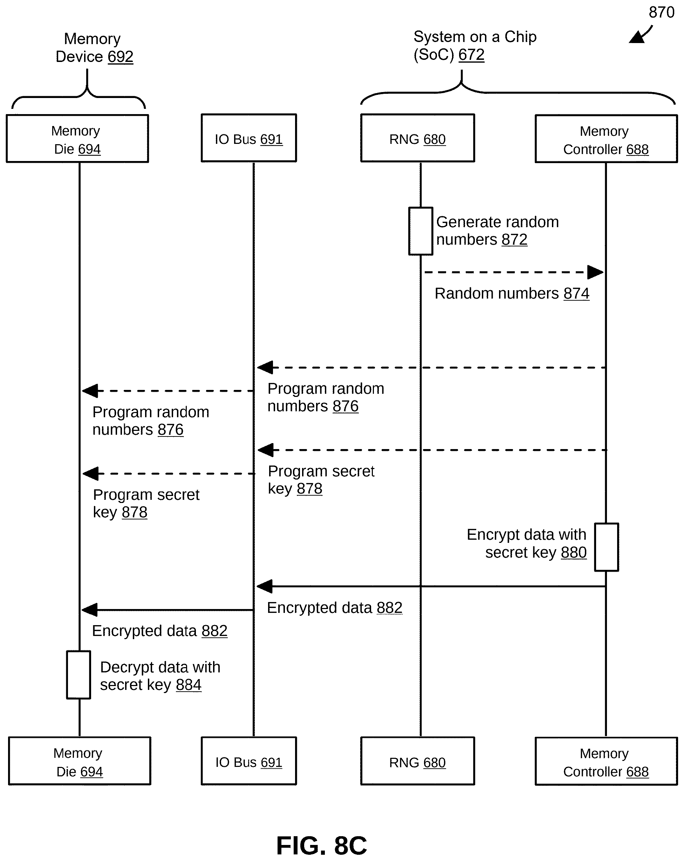

In various embodiments of the present disclosure, various methods may be used for cryptographic key initialization and provision. In one embodiment, a process of public and private key pair generation and key exchange may be added into the memory device, as described below in the examples of FIGS. 6B and 8B. In one embodiment, a process of public and private key pair generation and key exchange may be added into the memory device, as described below in the examples of FIGS. 6C and 8C. In another embodiment a key provisioning process may be done at the factory provisioning time when the main SoC-memory device pairing is complete, as described below in the examples of FIGS. 6A and 8A. A non-volatile memory in the memory device, such as an OTP / Fuse, may be used to store the keys. In key provisioning, the cryptographic key may be provisioned by a trust identity in the SoC via the standard model specific register (MSR) access. In key protection, access may be protected by a 128 bit or 256 bit passcode.

FIG. 6A is a block diagram schematically illustrating key initialization 600 based on a sequence in a memory device 622 with one or more PIM devices 632a to 632n, according to an embodiment. In some examples, the key initialization 600 of FIG. 6A may correspond to the key initialization method 800 illustrated in FIG. 8A.

Referring to FIG. 6A, an SoC 602 can be in communication with a memory device 622 via an IO bus 621. The SoC 602 can include a CPU 604, a GPU 606, an RNG 610, and any number of memory controllers 618a to 618n, which can respectively include CEs 620a to 620n. Alternatively, in some examples, the CEs can differ in number from the memory controllers, for example the SoC 602 can include any number of CEs. The memory device 622 can include memory dies 624a to 624n having PIMs 632a to 632n. Memory dies 624a to 624n can respectively be in communication with memory controllers 618a to 618n of SoC 602. Alternatively, in some examples, the memory dies 624a to 624n can differ in number from the memory controllers, for example the memory device 622 can include any number of memory dies 624a to 624n. The memory dies 624a to 624n can also include memory registers 626a to 626n, CEs 628a to 628n, and hard coded sequences 630a to 630n (e.g., in memory firmware), respectively. Alternatively or additionally, the PIMs 632a to 632n can include CEs, as in the examples of FIGS. 5A-B.

In various embodiments, the SoC 602 may correspond to the SoC 302 of FIG. 3 or to any host, such as the processor 920, main processor 921, auxiliary processor 923, and/or electronic device 901 of FIG. 9, a CPU, an AP, a GPU, an ISP, a sensor hub processor, and/or a CP, and is not limited by the present disclosure.

In this example, there are sequences 630a to 630n programmed (e.g., hard coded in memory firmware or programmed in Read Only Memory) into the memory device 622 (e.g., specifying a memory location, value, and/or order) to initiate a secret key programming time interval. For example, in response to this programming sequence, a read/write to the memory device 622 having the correct order and correct value can initiate a secret key programming time interval. During the secret key programming time interval, a secret key register among registers 626a to 626n can be programmed in the memory device 622. For example, at the time of SoC manufacture, the SoC 602 can be configured (e.g., via installing a firmware image) to instruct the memory controllers 618a to 618n to follow the sequence to initiate programming to memory device 622.

Subsequently, upon each boot up of SoC 602 and/or memory device 622, after initialization of memory 622, the memory firmware can execute the sequence. After the correct sequence, a secret key register among registers 626a to 626n can be opened for programming. For example, the secret key register can remain open for programming during the secret key programming time interval. For example, the RNG 610 of SoC 602 can generate a random number S as the secret key. Accordingly, the memory controllers 618a to 618n can program the random number S into the respective secret key registers among registers 626a to 626n in memory device 622.

In an example, as described in greater detail in the example of FIG. 8A, CEs 620a to 620n of memory controllers 618a to 618n, respectively, can encrypt data with the secret key S. The memory controllers 618a to 618n can then transfer the encrypted data via the IO bus 621. Memory dies 624a to 624n, respectively, can receive the data, and as needed can decrypt the data with secret key S, as described in detail in the example of FIG. 8A.

FIG. 6B is a block diagram schematically illustrating key initialization 640 based on key exchange in a memory device with one or more PIM devices 667a to 667n, according to an embodiment. In some examples, the key initialization 640 of FIG. 6B may correspond to the key initialization method 840 illustrated in FIG. 8B.

Referring to FIG. 6B, an SoC 642 can be in communication with a memory device 662 via an IO bus 661. The SoC 642 can include a CPU 644, a GPU 646, an RNG 650, and any number of memory controllers 658a to 658n, which can respectively include CEs 660a to 660n. Alternatively, in some examples, the SoC 642 can include any number of CEs. The memory device 662 can include memory dies 664a to 664n having PIMs 667a to 667n. Memory dies 664a to 664n can respectively be in communication with memory controllers 658a to 658n of SoC 642. Alternatively, in some examples, the memory device 662 can include any number of memory dies 664a to 664n. In some examples, the PIMs 667a to 667n may be PNMs. The memory dies 664a to 664n can also include memory registers 666a to 666n, in-memory CEs 668a to 668n, and in-memory RNGs 669a to 669n, respectively. Alternatively or additionally, the PIMs 667a to 667n can include CEs, as in the examples of FIGS. 5A-B.

In various embodiments, the SoC 642 may correspond to the SoC 302 of FIG. 3 or to any host, such as the processor 920, main processor 921, auxiliary processor 923, and/or electronic device 901 of FIG. 9, a CPU, an AP, a GPU, an ISP, a sensor hub processor, and/or a CP, and is not limited by the present disclosure.

In some embodiments, the key initialization 640 may involve an asymmetric key exchange process (such as a Diffie-Hellman key exchange, elliptic-curve cryptography, or any other asymmetric key exchange process) as part of the initialization between SoC 642 and the memory device 662 upon SoC boot. In some examples, the key initialization 640 may be broadly similar to a hybrid cryptographic system, wherein an asymmetric key exchange process (such as Diffie-Hellman or another key exchange) is used to exchange a symmetric secret key, which is subsequently used for encryption and decryption. By dynamically changing the key during every initialization, the key initialization method 640 may provide high security protection (e.g., higher than the key initialization 600 and 670 of FIGS. 6A and 6C), but may require additional computational complexity.

Upon each boot up of SoC 642 and/or memory device 662, as described in greater detail in the example of FIG. 8B, one or more of the memory controllers 658a to 658n can request RNG 650 to provide a random number P1. Likewise, the memory die 664a can request in-memory RNG 669a to provide a second random number P2.

When the in-memory RNGs 669a to 669n are instantiated one per memory die, each of them (e.g., a respective RNG 669k) can independently generate a random number. In some examples, these random numbers may be different per die, hence each of memory controllers 658a to 658n (e.g., a respective memory controller 658k) and the corresponding CEs 660a to 660n (e.g., a respective CE 660k) can perform independently with different keys. In another embodiment, the in-memory RNG 669 can instead be instantiated as a single RNG shared for the whole memory device 662. In that case the key from the memory device 662 is the same for all memory dies 664.

CE 660a of memory controller 658a and in-memory CE 668a can then carry out a key exchange process to obtain a shared secret key S. SoC 642 and memory device 662 can communicate, e.g. via the IO bus 661, and can agree on the protocol for key exchange, such as a Diffie-Hellman key exchange, elliptic-curve cryptography, or any other asymmetric key exchange process. For example, the SoC 642 and memory device 662 may follow a protocol for communicating the key exchange protocol over the memory IO bus 661, agreed upon between the memory controller 658 on the SoC side, and the memory device 662. Memory die 664a then can save session keys P2 and S to its local registers 666a. Likewise, memory controller 658a can save session keys P1 and S to side hardware of SoC 642. Memory controller 658a can encrypt the data with the secret key S, then transfer the encrypted data over the IO bus 661, as described in detail in the example of FIG. 8B. Memory die 664a can receive the encrypted data, and as needed can decrypt the data with the secret key S.

FIG. 6C is a block diagram schematically illustrating key initialization 670 not using key exchange in a memory device with a PIM, according to an embodiment. In some examples, the key initialization 670 of FIG. 6C may correspond to the key initialization method 870 illustrated in FIG. 8C.

Referring to FIG. 6C, an SoC 672 can be in communication with a memory device 692 via an IO bus 691. The SoC 672 can include a CPU 674, a GPU 676, an RNG 680, an OTP / Fuse 686, and any number of memory controllers 688a to 688n, which can respectively include CEs 690a to 690n. Alternatively, in some examples, the SoC 672 can include any number of CEs. The memory device 692 can include one or more memory dies 694a to 694n having PIM devices 699a to 699n. Memory dies 694a to 694n can respectively be in communication with memory controllers 688a to 688n of SoC 672. Alternatively, in some examples, the memory device 692 can include any number of memory dies 694a to 694n. In some examples, the PIMs 699a to 699n may be PNMs. The memory dies 694a to 694n can also include memory registers (not shown), in-memory CEs 698a to 698n, and OTP / Fuses 696a to 696n, respectively. Alternatively or additionally, the PIMs 699a to 699n can include CEs, as in the examples of FIGS. 5A-B.

In various embodiments, the SoC 672 may correspond to the SoC 302 of FIG. 3 or to any host, such as the processor 920, main processor 921, auxiliary processor 923, and/or electronic device 901 of FIG. 9, a CPU, an AP, a GPU, an ISP, a sensor hub processor, and/or a CP, and is not limited by the present disclosure.

As discussed above, while the key initialization method 640 based on key exchange may provide high security protection by dynamically changing the key in every initialization, key initialization method 640 may also result in high complexity due to the key exchange process. To reduce the computational complexity, the example of FIG. 6C provides key initialization 670 without the key exchange process. For example, the key initialization 670 may be broadly similar to a symmetric cryptographic system. However, in order for the SoC 672 and the memory device 692 to remain updated (e.g., aware) what key should be used for encryption and decryption, the key initialization 670 can employ a method of key provisioning in the factory, which is a trusted control environment.

Thus, in an example, during device manufacturing of the SoC 672 and memory device 692, a secure key can be provisioned. For example, as described in greater detail in the example of FIG. 8C, the RNG 680 in SoC 672 can generate a set of random numbers S₁, S₂, ..., Sₙ. The random numbers S₁, ..., Sₙ can be saved to the OTP / Fuse 686 of SoC 672. The memory controllers 688a to 688n can then program (e.g., via the IO bus 691) the random numbers S₁, ..., Sₙ into the OTP / Fuses 696a to 696n, respectively, on the side of memory device 692, as described in FIG. 8C.

After the secure keys S₁, ..., Sₙ have been provisioned, upon each boot up of SoC 672 and/or memory device 692, the memory controller 688a can program the memory device 692 to use the random number Sₓ (e.g., of the numbers S₁, ..., Sₙ) as the current secret key for encryption. Accordingly, the memory controller 688a can encrypt data with the secret key Sₓ, and can then transfer the encrypted data via the IO bus 691, as illustrated in FIG. 8C. Memory die 694a can then receive the encrypted data, and as needed can decrypt the data with secret key Sₓ.

In this example, key revocation can also be handled. For example, the SoC 672 can program an update in the OTP / Fuse 686 or in its firmware to indicate which secret keys (e.g., of the numbers S₁, ..., Sₙ) may be used, and which may not be used.

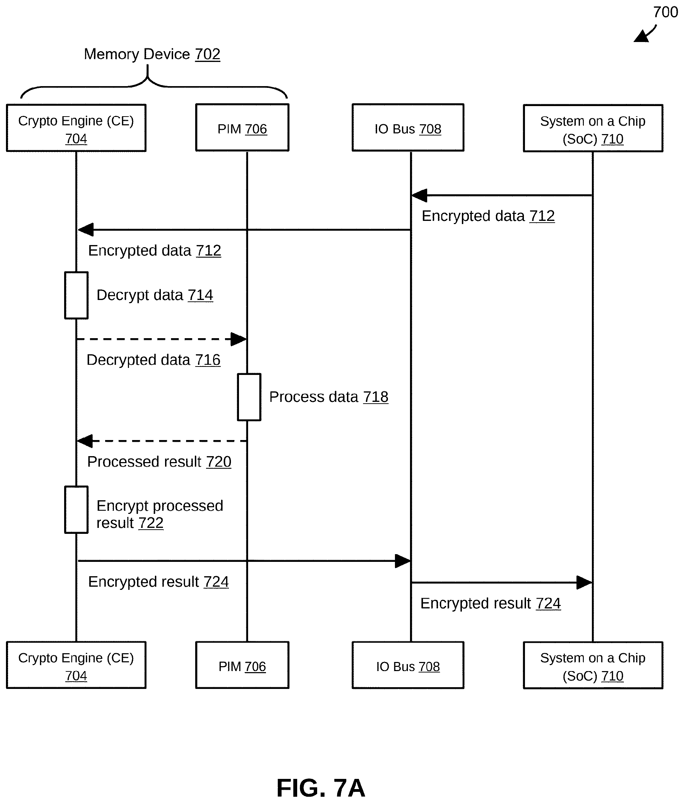

FIG. 7A is a communication flow diagram illustrating a method 700 for efficiently enabling PIM or PNM compression on a mobile SoC, according to an embodiment. The method 700 may be performed by a memory device 702 including a CE 704 and PIM 706, in communication with an SoC 710 via an IO bus 708. For example, the memory device 702 may correspond to the memory device 310, while the SoC 710 may correspond to SoC 302, and the IO bus 708 may correspond to IO bus 320, in the example of FIG. 3, or to the IO bus in the examples of FIGS. 4A-4B and 5A-5B. In another example, the SoC 710 may correspond to any host, such as the processor 920, main processor 921, auxiliary processor 923, and/or electronic device 901 of FIG. 9, a CPU, an AP, a GPU, an ISP, a sensor hub processor, and/or a CP, and is not limited by the present disclosure.

In FIGS. 7A-7C, transmissions of encrypted quantities are shown with solid lines, while transmissions of unencrypted (e.g., cleartext) quantities are shown with dotted lines.

Referring to FIG. 7A, the SoC 710 can first send encrypted data 712 to memory device 702 (for example, to CE 704 of memory device 702) via IO bus 708. For example, encrypted data 712 may be transmitted over IO bus 708 in encrypted format.

Next, the CE 704 can receive the encrypted data 712. Note that CE 704 may be situated within memory device 702, for example on the memory die or on the PIM 708, and is not limited by the present disclosure. As shown in the examples of FIGS. 3, 4A-4B, and 5A-5B, the CE 704 may be included in the memory device 702 so as to encrypt and/or decrypt the data as needed, as in operation 714.

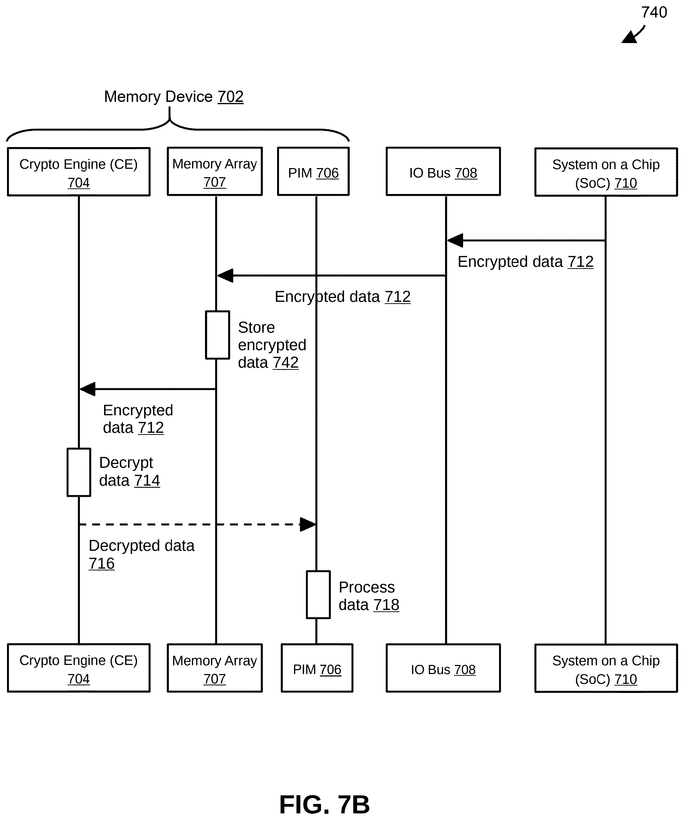

As described above, the data 712 may be encrypted while being transmitted over the DRAM IO bus 708. Accordingly, in some embodiments, the data may be stored in the memory array of memory device 702 in the encrypted format, as received. FIG. 7B is a communication flow diagram illustrating a method 740 for storing encrypted data in a memory array 707 while enabling PIM or PNM compression on a mobile SoC, according to an embodiment. For example, referring to FIG. 7B, the encrypted data 712 may be immediately stored at operation 742 in the memory array 707 upon being received by memory device 702. In this example, the data may then be decrypted at 714 when needed for processing at operation 718, as described below.

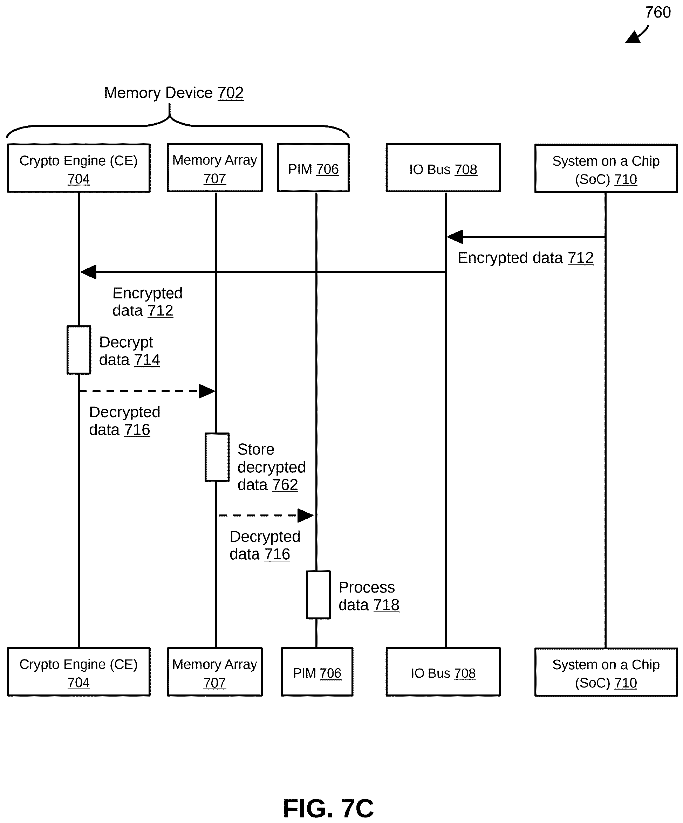

In other embodiments, the data may be decrypted at 714 before being stored in the memory array, so the data is stored in unencrypted format (e.g., cleartext). FIG. 7C is a communication flow diagram illustrating a method 760 for storing unencrypted data in a memory array 707 while enabling PIM or PNM compression on a mobile SoC, according to an embodiment. For example, referring to FIG. 7C, the memory device 702 may immediately proceed to operation 714 before storing at operation 762 the decrypted data in the memory array 707. In this example, the decrypted data 716 may then be sent to the PIM 706 when needed for processing at operation 718, as described below.

Next, referring again to FIG. 7A, the CE 704 can decrypt at 714 the encrypted data, thereby obtaining decrypted data.

Next, the CE 704 can send at 716 the decrypted data to the PIM 706 of the memory device 702.

Next, the PIM 706 may process the decrypted data. As described above, the PIM 706 may only be able to process unencrypted data. For example, the PIM 706 may perform matrix-matrix multiply (MMM or GEMM) and/or matrix-vector multiply (MVM or GEMV) computations, for example for decoder-based LLMs, such as the weights and feature map of the **LLM** models and/or commercial large models and user private models (LoRA) for PIM usage. Alternatively or additionally, the PIM 706 may perform any other type of computations or applications, and is not limited by the present disclosure.

Next, the PIM 706 can send the results 720 of processing to the CE 704.

Next, the CE 704 can encrypt at 722 the processed results. The memory device 702 may also store the encrypted processed results 722 in the memory array.

Finally, the memory device 702 can optionally send at 724 the encrypted processed results to SoC 710 via IO bus 708. For example, if the SoC 710 subsequently needs to perform further computation based on the processed results, it can send a request to fetch the encrypted processed results from the memory device 702, and the memory device 702 can then send at 724 the encrypted processed results to SoC 710. Alternatively, in some examples, the encrypted processed results may remain in the memory device 702.

The process 700 can then end.

Additionally, some embodiments may include PIM-encryption to protect the LLM model weights. Some embodiments may co-exist with compression logic. Some embodiments may provide efficient and secure ways to provision the decryption/encryption key, as described above in the examples of FIGS. 6A-6C and below in the examples of FIGS. 8A-8C.

FIG. 8A is a communication flow diagram illustrating a method 800 for key initialization based on a sequence in a memory device with a PIM, according to an embodiment. The method 800 may be performed by a memory device 622 including a memory die 624 in communication via an IO bus 621 with an SoC 602 including an RNG 610 and a memory controller 618. For example, the memory device 622, memory die 624, SoC 602, IO bus 621, RNG 610, and memory controller 618 may correspond to the example of FIG. 6A. In an example, the memory controller 618 and memory die 624 may correspond to respective ones, among memory controllers 618a to 618n and memory dies 624a to 624n, of FIG. 6A. In another example, the SoC 602 may correspond to any host, such as the processor 920, main processor 921, auxiliary processor 923, and/or electronic device 901 of FIG. 9, a CPU, an AP, a GPU, an ISP, a sensor hub processor, and/or a CP, and is not limited by the present disclosure.

In FIGS. 8A-8C, transmissions of encrypted quantities are shown with solid lines, while transmissions of unencrypted (e.g., cleartext) quantities are shown with dotted lines.

Referring to FIG. 8A, during system boot up, after memory initialization, memory controller 618 can execute and send a native (e.g., hard coded) key initialization sequence 802 to memory die 624 via the IO bus 621. As described previously in the example of FIG. 6A, native key initialization sequence 802 can match a sequence programmed into the memory device 622 (e.g., hard coded in memory firmware or programmed in Read Only Memory or the OTP / Fuse 616 of FIG. 6A). For example, at the time of SoC manufacture, the SoC 602 can be configured (e.g., via a firmware image) to instruct the memory controllers to follow the sequence to initiate programming to memory die 624. Accordingly, when received, the memory die 624 of memory device 622 can recognize native key initialization sequence 802, which can instruct memory die 624 to initiate a secret key programming interval 804.

Next, in response to receiving native key initialization sequence 802 (e.g., a read/write to the memory device 622 having the correct order and correct value), the memory die 624 of memory device 622 can initiate the secret key programming interval 804. For example, the secret key programming interval 804 can be a time interval during which the secret key register (e.g., among registers 626a to 626n of FIG. 6A) can be opened for programming. The secret key register may remain open for programming for the duration of the secret key programming interval 804.

Concurrently, the RNG 610 may generate a secret key 806. For example, the RNG 610 can generate a random number S to be used as the secret key 806.

Next, the RNG 610 can send 808 the generated secret key to memory controller 618.

Next, during the secret key programming time interval 804, the memory controller 618 can program at 810 the secret key register (e.g., among registers 626a to 626n of FIG. 6A) within the memory die 624.

Note that send the native key initialization sequence 802 through programming at 810 the secret key register may occur during system boot up of SoC 602, e.g. after memory initialization of memory device 622.

Subsequently, during operation, the memory controller 618 can encrypt data 812 with the secret key. For example, a CE of memory controller 618, such as a respective one of CEs 620a to 620n of FIG. 6A, can encrypt the data 812 with the secret key.

The memory controller 618 can then transmit the encrypted data 814 to the memory die 624 of memory device 622 via the IO bus 621.

The memory die 624 can receive the encrypted data, and as needed can decrypt at 816 the data with the secret key. For example, a CE of memory die 624, such as a respective one of CEs 628a to 628n of FIG. 6A, can decrypt the data at 816 with the secret key.

The PIM or PNM of memory die 624 (e.g., a respective one of PIMs 632a to 632n of FIG. 6A) can then process the decrypted data 816. Alternatively or additionally, the CE of memory die 624 can encrypt data, such as a result of processing decrypted data 816, using the secret key, and memory die 624 can then send the encrypted data to memory controller 618.

The process 800 can then end.

FIG. 8B is a communication flow diagram illustrating a method 840 for key initialization based on key exchange in a memory device with a PIM, according to an embodiment. The method 840 may be performed by a memory device 662 including a memory die 664 in communication via an IO bus 661 with an SoC 642 including an RNG 650 and a memory controller 658, such as those of the example of FIG. 6B. For example, the memory device 662, memory die 664, SoC 642, IO bus 661, RNG 650, and memory controller 658 may correspond to the example of FIG. 6B. In an example, the memory controller 658 and memory die 664 may correspond to respective ones, among memory controllers 658a to 658n and memory dies 664a to 664n, of FIG. 6B. In another example, the SoC 642 may correspond to any host, such as the processor 920, and/or another processor or electronic device 901 of FIG. 9, and is not limited by the present disclosure.

The method 840 for key initialization based on key exchange may involve an asymmetric key exchange process as part of the initialization between SoC 642 and the memory device 662. The method 840 based on key exchange may provide high security protection by dynamically changing the key in every initialization.

Referring to FIG. 8B, during each system boot up of SoC 642 and/or memory device 662, the memory controller 658 can send a request 842 to the RNG 650 to provide a random number.

Next, RNG 650 can generate the random number 844.

Next, the RNG 650 can send the random number 846 to memory controller 658.

Next, an RNG of the memory die 664 can generate a second random number 848. For example, memory die 664 can request an in-memory RNG (such as a respective one of RNGs 669a to 669n of FIG. 6B) to provide a random number, and the in-memory RNG can generate the random number 848.

Next, the memory controller 658 and the memory die 664 can perform an asymmetric key exchange process 850 to obtain a shared secret key. For example, asymmetric key exchange process 850 may be a Diffie-Hellman key exchange, elliptic-curve cryptography, or any other asymmetric key exchange process.

In an example, a CE of memory controller 658 and an in-memory CE of memory die 664 can carry out the key exchange process 850.

For example, the memory controller 658 and the memory die 664 can communicate, e.g. via IO bus 661, and can agree on the protocol for key exchange. For example, the memory controller 658 and the memory die 664 may follow a DRAM protocol for communicating the key exchange protocol, indicating that the following data is for the key, and may agree on using which bus signal and/or pin to carry which information.

Next, memory controller 658 can save at 852 the shared secret key and the random number 846 as session keys. For example, memory controller 658 can save at 852 the session keys to side hardware of SoC 642.

Next, memory die 664 can then save at 854 the shared secret key and the second random number 848 as session keys. For example, memory die 664 can save at 854 the session keys to its local registers (e.g., to a respective one of registers 666a to 666n of FIG. 6B).

Subsequently, during operation, the memory controller 658 can encrypt data at 856 with the shared secret key. For example, a CE of memory controller 658, such as a respective one of CEs 660a to 660n of FIG. 6B, can encrypt the data at 856 with the secret key.

The memory controller 658 can then transmit the encrypted data 858 to memory die 664 via the IO bus 661.

Next, the memory die 664 can receive the encrypted data, and as needed can decrypt at 860 the data with the secret key. For example, a CE of memory die 664, such as a respective one of CEs 668a to 668n of FIG. 6B, can decrypt the data at 860 with the secret key.

The PIM or PNM of memory die 664 (e.g., a respective one of PIMs 667a to 667n of FIG. 6B) can then process the decrypted data 860. Alternatively or additionally, the CE of memory die 664 can encrypt data, such as a result of processing decrypted data 860, using the secret key, and memory die 664 can then send the encrypted data to memory controller 658.

The process 840 can then end.

FIG. 8C is a communication flow diagram illustrating a method 870 for key initialization not using key exchange in a memory device with a PIM, according to an embodiment. The method 870 may be performed by a memory device 692 including a memory die 694 in communication via an IO bus 691 with an SoC 672 including an RNG 680 and a memory controller 688, such as those of the example of FIG. 6C. For example, the memory device 692, memory die 694, SoC 672, IO bus 691, RNG 680, and memory controller 688 may correspond to the example of FIG. 6C. In an example, the memory controller 688 and memory die 694 may correspond to respective ones, among memory controllers 688a to 688n and memory dies 694a to 694n, of FIG. 6C. In another example, the SoC 672 may correspond to any host, such as the processor 920, and/or another processor or electronic device 901 of FIG. 9, and is not limited by the present disclosure.

By providing key initialization without a key exchange process, the method 870 can provide reduced computational complexity compared with the method 840 for key initialization based on key exchange.

Referring to FIG. 8C, during device manufacturing of the SoC 672 and memory device 692, a secure key can be provisioned. For example, the RNG 680 within SoC 672 can generate a set of random numbers 872.

Next, the RNG 680 can send the random numbers 874 to memory controller 688, which can save the set of random numbers to an OTP / Fuse of SoC 672 (e.g., OTP / Fuse 686 of FIG. 6C).

The memory controller 688 can then program at 876 the set of random numbers into memory die 694 via the IO bus 691. For example, memory controller 688 can program at 876 the set of random numbers into a respective one of the OTP / Fuses 696a to 696n of FIG. 6C, on memory die 694.

Subsequently, during each system boot up of SoC 672 and/or memory device 692, the memory controller 688 can program the memory device 692 to use a particular random number of the set of random numbers as the current secret key 878 for encryption. For example, the memory controller 688 can program the secret key 878 into memory device 692 via the IO bus 691.

In some examples, key revocation can also be handled. For example, the SoC 672 may also program at 878 an update to indicate which secret keys (e.g., of the set of random numbers 876) remain valid, and which ones should not be used.

Subsequently, during operation, the memory controller 688 can encrypt data 880 with the secret key. For example, a CE of memory controller 688, such as a respective one of CEs 690a to 690n of FIG. 6C, can encrypt the data 880 with the secret key.

Next, the memory controller 688 can transmit the encrypted data 882 to memory die 694 via the IO bus 691.

Next, the memory die 694 can receive the encrypted data, and as needed can decrypt at 884 the data with secret key. For example, a CE of memory die 664, such as a respective one of CEs 668a to 668n of FIG. 6B, can decrypt the data at 860 with the secret key.

The PIM or PNM of memory die 664 (e.g., a respective one of PIMs 667a to 667n of FIG. 6B) can then process the decrypted data 860. Alternatively or additionally, the CE of memory die 664 can encrypt data, such as a result of processing decrypted data 860, using the secret key, and memory die 664 can then send the encrypted data to memory controller 658.

The process 870 can then end.

FIG. 9 is a block diagram of an electronic device in a network environment 900, according to an embodiment.

Referring to FIG. 9, an electronic device 901 in a network environment 900 may communicate with an electronic device 902 via a first network 998 (e.g., a short-range wireless communication network), or an electronic device 904 or a server 908 via a second network 999 (e.g., a long-range wireless communication network). The electronic device 901 may communicate with the electronic device 904 via the server 908. The electronic device 901 may include a processor 920, a memory 930, an input device 950, a sound output device 955, a display device 960, an audio module 970, a sensor module 976, an interface 977, a haptic module 979, a camera module 980, a power management module 988, a battery 989, a communication module 990, a subscriber identification module (SIM) card 996, or an antenna module 997. In one embodiment, at least one (e.g., the display device 960 or the camera module 980) of the components may be omitted from the electronic device 901, or one or more other components may be added to the electronic device 901. Some of the components may be implemented as a single integrated circuit (IC). For example, the sensor module 976 (e.g., a fingerprint sensor, an iris sensor, or an illuminance sensor) may be embedded in the display device 960 (e.g., a display).

The processor 920 may execute software (e.g., a program 940) to control at least one other component (e.g., a hardware or a software component) of the electronic device 901 coupled with the processor 920 and may perform various data processing or computations.

As at least part of the data processing or computations, the processor 920 may load a command or data received from another component (e.g., the sensor module 976 or the communication module 990) in volatile memory 932, process the command or the data stored in the volatile memory 932, and store resulting data in non-volatile memory 934. The processor 920 may include a main processor 921 (e.g., a central processing unit (CPU) or an application processor (AP)), and an auxiliary processor 923 (e.g., a graphics processing unit (GPU), an image signal processor (ISP), a sensor hub processor, or a communication processor (CP)) that is operable independently from, or in conjunction with, the main processor 921. Additionally or alternatively, the auxiliary processor 923 may be adapted to consume less power than the main processor 921, or execute a particular function. The auxiliary processor 923 may be implemented as being separate from, or a part of, the main processor 921.

The auxiliary processor 923 may control at least some of the functions or states related to at least one component (e.g., the display device 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). The auxiliary processor 923 (e.g., an image signal processor or a communication processor) may be implemented as part of another component (e.g., the camera module 980 or the communication module 990) functionally related to the auxiliary processor 923.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934. Non-volatile memory 934 may include internal memory 936 and/or external memory 938.

The program 940 may be stored in the memory 930 as software, and may include, for example, an operating system (OS) 942, middleware 944, or an application 946.

The input device 950 may receive a command or data to be used by another component (e.g., the processor 920) of the electronic device 901, from the outside (e.g., a user) of the electronic device 901. The input device 950 may include, for example, a microphone, a mouse, or a keyboard.

The sound output device 955 may output sound signals to the outside of the electronic device 901. The sound output device 955 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 960 may visually provide information to the outside (e.g., a user) of the electronic device 901. The display device 960 may include, for example, a display, a hologram device, or a projector and control circuitry to control a corresponding one of the display, hologram device, and projector. The display device 960 may include touch circuitry adapted to detect a touch, or sensor circuitry (e.g., a pressure sensor) adapted to measure the intensity of force incurred by the touch.

The audio module 970 may convert a sound into an electrical signal and vice versa. The audio module 970 may obtain the sound via the input device 950 or output the sound via the sound output device 955 or a headphone of an external electronic device 902 directly (e.g., wired) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. The sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device 902 directly (e.g., wired) or wirelessly. The interface 977 may include, for example, a high- definition multimedia interface (HDMI), a universal serial bus (USB) interface, a secure digital (SD) card interface, or an audio interface.

A connecting terminal 978 may include a connector via which the electronic device 901 may be physically connected with the external electronic device 902. The connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or an electrical stimulus which may be recognized by a user via tactile sensation or kinesthetic sensation. The haptic module 979 may include, for example, a motor, a piezoelectric element, or an electrical stimulator.

The camera module 980 may capture a still image or moving images. The camera module 980 may include one or more lenses, image sensors, image signal processors, or flashes. The power management module 988 may manage power supplied to the electronic device 901. The power management module 988 may be implemented as at least part of, for example, a power management integrated circuit (PMIC).

The battery 989 may supply power to at least one component of the electronic device 901. The battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the AP) and supports a direct (e.g., wired) communication or a wireless communication. The communication module 990 may include a wireless communication module 992 (e.g., a cellular communication module, a short-range wireless communication module, or a global navigation satellite system (GNSS) communication module) or a wired communication module 994

(e.g., a local area network (LAN) communication module or a power line communication (PLC) module). A corresponding one of these communication modules may communicate with the external electronic device via the first network 998 (e.g., a short-range communication network, such as BLUETOOTH^{™}, wireless-fidelity (Wi-Fi) direct, or a standard of the Infrared Data Association (IrDA)) or the second network 999 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The antenna module 997 may transmit or receive a signal or power to or from the outside (e.g., the external electronic device) of the electronic device 901. The antenna module 997 may include one or more antennas, and, therefrom, at least one antenna appropriate for a communication scheme used in the communication network, such as the first network 998 or the second network 999, may be selected, for example, by the communication module 990 (e.g., the wireless communication module 992). The signal or the power may then be transmitted or received between the communication module 990 and the external electronic device via the selected at least one antenna.

Commands or data may be transmitted or received between the electronic device 901 and the external electronic device 904 via the server 908 coupled with the second network 999. Each of the electronic devices 902 and 904 may be a device of a same type as, or a different type, from the electronic device 901. All or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 901. The electronic device 901 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A memory device comprising a cryptographic engine, CE (316, 408, 458, 508a-508n, 562, 628a-628n, 668a-668n, 698a-698n, 704),
wherein the memory device (310, 400, 454, 500, 622, 662, 692, 702) is configured to receive encrypted data via a memory input/output, IO, bus (320, 621, 661, 691, 708), and
wherein the CE (316, 408, 458, 508a-508n, 562, 628a-628n, 668a-668n, 698a-698n, 704) is configured to decrypt the encrypted data to obtain decrypted data.

2. The memory device of claim 1, further comprising a processing-in-memory, PIM, or processing-near-memory, PNM, device (314, 404a-404n, 462, 504a-504n, 560, 632a-632n, 667a-667n, 699a-699n, 706) configured to process the decrypted data.

3. The memory device of claim 2, wherein to process the decrypted data comprises to perform, by the PIM or PNM device (314, 404a-404n, 462, 504a-504n, 560, 632a-632n, 667a-667n, 699a-699n, 706), a matrix-matrix multiplication, GEMM, or matrix-vector multiplication, GEMV, based on the decrypted data.

4. The memory device of any one of claims 2 to 3, wherein the memory device is further configured to store the encrypted data, and
wherein the CE (316, 408, 458, 508a-508n, 562, 628a-628n, 668a-668n, 698a-698n, 704) is further configured to decrypt the encrypted data to obtain the decrypted data before the PIM or PNM device (314, 404a-404n, 462, 504a-504n, 560, 632a-632n, 667a-667n, 699a-699n, 706) processes the decrypted data.

5. The memory device of any one of claims 2 to 4, wherein the encrypted data is received via the memory IO bus (320, 621, 661, 691, 708) from a host,
wherein the CE (316, 408, 458, 508a-508n, 562, 628a-628n, 668a-668n, 698a-698n, 704) is further configured to encrypt the processed decrypted data to obtain an encrypted processed result, and
wherein the memory device is further configured to send the encrypted processed result via the memory IO bus (320, 621, 661, 691, 708) to the host.

6. The memory device of any one of claims 2 to 5, wherein the CE (316, 508a-508n, 628a-628n, 668a-668n, 698a-698n, 704) is located on the PIM or PNM device (314, 504a-504n, 560, 706).

7. The memory device of any one of claims 2 to 5, wherein the CE (408, 458, 628a-628n, 668a-668n, 698a-698n, 704) is located on a die (624a-624n, 644a-644n,694a-694n) of the memory device (400, 454, 622, 662, 692, 702), outside of the PIM or PNM device (404a-404n, 462, 632a-632n, 667a-667n, 699a-699n, 706).

8. The memory device of any one of claims 1 to 7, wherein the memory device (310, 400, 454, 500, 622, 662, 692, 702) comprises a double data rate, DDR, memory device or a dynamic random-access memory, DRAM, device.

9. The memory device of any one of claims 1 to 8, wherein the memory device (310, 400, 454, 500, 622, 662, 692, 702) is further configured to store the decrypted data.

10. The memory device of any one of claims 1 to 9, wherein the memory device (622, 662, 692) is further configured to exchange a shared secret key with a memory controller (618) based on a key exchange protocol, and
wherein to decrypt the encrypted data comprises to decrypt the encrypted data with the shared secret key.

11. The memory device of any one of claims 1 to 10, wherein at least one symmetric key is saved to a one time programmable, OTP, memory or fuse (696a-696n) of the memory device (692), and
wherein to decrypt the encrypted data comprises to decrypt the encrypted data with the at least one symmetric key.

12. The memory device of any one of claims 1 to 11, wherein the memory device is further configured to:
receive a programming sequence from a system on a chip, SoC, and
initiate a secret key programming interval in response to the programming sequence,
wherein the memory device further comprises a secret key register configured to receive a secret key from the SoC during the secret key programming interval, and
wherein to decrypt the encrypted data comprises to decrypt the encrypted data with the secret key.

13. A method for processing-in-memory, PIM, or processing-near-memory, PNM, compression, the method comprising:
receiving, by a memory device (310, 400, 454, 500, 622, 662, 692, 702) including a cryptographic engine, CE (316, 408, 458, 508a-508n, 562, 628a-628n, 668a-668n, 698a-698n, 704), and a PIM or PNM device (314, 404a-404n, 462, 504a-504n, 560, 632a-632n, 667a-667n, 699a-699n, 706), encrypted data via a memory input/output, IO, bus (320, 621, 661, 691, 708);
decrypting, by the CE (316, 408, 458, 508a-508n, 562, 628a-628n, 668a-668n, 698a-698n, 704), the encrypted data to obtain decrypted data; and
processing, by the PIM or PNM device, the decrypted data.

14. The method of claim 13, wherein the CE (316, 508a-508n, 628a-628n, 668a-668n, 698a-698n, 704) is located on the PIM or PNM device (314, 504a-504n, 560, 706).

15. The method of claim 13 or 14, further comprising storing the encrypted data, wherein the decrypting, by the CE (316, 408, 458, 508a-508n, 562, 628a-628n, 668a-668n, 698a-698n, 704), the encrypted data occurs before the processing, by the PIM or PNM device (314, 404a-404n, 462, 504a-504n, 560, 632a-632n, 667a-667n, 699a-699n, 706), the decrypted data.
